# EUROPEAN PATENT APPLICATION

(11) **EP 4 507 033 A1**
(43) Date of publication of application: **12.02.2025**
(21) Application number: 22938010.0
(22) Date of filing: 29.04.2022
(51) Int. Cl.: H01M 4/38

(54) **NEGATIVE ELECTRODE MATERIAL AND PREPARATION METHOD THEREFOR, AND LITHIUM ION BATTERY**

(30) Priority: 22.04.2022 CN 202210431171
(71) Applicant: BTR New Material Group Co., Ltd., Shenzhen, Guangdong 518106 (CN); Panasonic Holdings Corporation, Osaka, 571-8501 (JP)
(72) Inventor: LIU, Yi, Shenzhen, Guangdong 518106 (CN); SATO, Yosuke, Moriguchi-shi, Osaka 570--8511 (JP)
(74) Representative: Studio Torta S.p.A.
(86) International application number: PCT/CN2022/090258
(87) International publication number: WO 2023/201775

(57) **Abstract**

Relating to the field of anode material, an anode material, a preparation method thereof and a lithium ion battery provided. The anode material includes an aggregate, the aggregate comprises a carbon material and a silicon material, there is an anion present in the aggregate, and the anion accounts a mass content of 0.001 wt% to 0.5 wt% in the anode material. The anode material, preparation method thereof, and lithium ion battery provided improve initial Coulombic efficiency of a silicon anode material, and reduce production cost.

## Description

This application claims the benefit of priority to Chinese Patent Application No. 202210431171.4 entitled "ANODE MATERIAL, PREPARATION METHOD THEREOF, AND LITHIUM ION BATTERY" filed on April 22, 2022, the entire content of which is incorporated herein by reference.

### TECHNICAL FIELD

The present disclosure relates to the technical field of anode material, particularly, to an anode material, a preparation method thereof, and a lithium ion battery.

### BACKGROUND

Lithium ion battery in the prior art is widely used in electric vehicle and consumer electronic due to advantages of large energy density, high output power, long cycle life, and less environmental pollution. A silicon anode has a theoretical specific capacity of up to 4200 mAh/g, which is 10 times than that of the graphite material, and has advantages of high capacity, rich source, relative safety, etc., thus is generally considered to be next generation of battery anode material. However, the silicon anode material still does not have an enough initial Coulombic efficiency, usually 80% to 85% at present, which is adverse to the silicon anode material to match with a lithium cobaltate cathode material having high initial Coulombic efficiency. Thus, the low initial Coulombic efficiency of a silicon anode material limits further application of the silicon anode.

Therefore, how to improve the initial Coulombic efficiency of a silicon anode material is an urgent problem to be solved at present.

### SUMMARY

In view of this, the present application provides an anode material, a preparation method thereof, and a lithium ion battery, which improve initial Coulombic efficiency of a silicon anode material, and reduce production cost.

In a first aspect, an anode material is provided. The anode material includes an aggregate, the aggregate includes a carbon material and a silicon material, there is an anion present in the aggregate, and the anion accounts a mass content of 0.001 wt% to 0.5 wt% in the anode material.

In the above scheme, the anode material includes an aggregate, the aggregate includes a carbon material and a silicon material, there is an anion present in the aggregate, and the anion accounts a mass content of 0.001 wt% to 0.5 wt% in the anode material. The anion generally exists at crystal lattice; defects of linear, surface and body; and surface, etc. Within a certain scope, the presence of the anion improves reactivity of these positions, which facilitates further transmission of a carrier, promotes diffusion of lithium ions and electrons in the material, and improves transmission efficiency of the carrier in the material, thereby improving rate performance, cycle performance and initial Coulombic efficiency of the anode material.

In an embodiment, the anion includes at least one of F⁻, Cl⁻, Br⁻, NO₃⁻, SO₄²⁻, NO²⁻, and PO₄³⁻.

In an embodiment, the silicon material includes at least one of an elemental silicon, a silicon alloy, and a silicon oxide. In an embodiment, the silicon material includes an elemental silicon and a silicon oxide layer present on surface of the elemental silicon.

In an embodiment, the silicon material includes an elemental silicon and a silicon oxide layer present on surface of the elemental silicon, where the silicon oxide layer has a thickness of 1 nm to 50 nm.

In an embodiment, the silicon material has a median particle size of 1 nm to 500 nm.

In an embodiment, the silicon material accounts a mass ratio of 10% to 80% in the anode material.

In an embodiment, the carbon material includes at least one of artificial graphite, natural graphite, soft carbon, hard carbon, amorphous carbon, activated carbon, mesocarbon microbead, carbon nanotube, carbon nanofiber, graphene, and porous carbon.

In an embodiment, the anion is present in interstitial void of the silicon material, where the anion has an ion radius of 118 pm to 940 pm.

In an embodiment, the anion is present in interstitial void of the silicon material, where the anion includes at least one of F⁻, Cl⁻, and Br⁻.

In an embodiment, the anode material further includes a carbon layer present on at least a part of surface of the aggregate.

In an embodiment, the anode material further includes a carbon layer present on at least a part of surface of the aggregate, where the carbon layer includes amorphous carbon.

In an embodiment, the anode material further includes a carbon layer coated on at least part of surface of the aggregate, where the carbon layer has a thickness of 1 nm to 3000 nm.

In an embodiment, the carbon material accounts a mass ratio of 10% to 80% in the anode material.

In an embodiment, the anode material has a median particle size of 0.5 µm to 30 pm.

In an embodiment, the anode material has a specific surface area of ≤10 m²/g.

In a second aspect, an embodiment of the present disclosure provides a preparation method of an anode material, including the following steps:
hydrolyzing a mixed solution including a silicon source precursor and an anion-containing inorganic salt to obtain a hydrolysate;
reducing the hydrolysate to obtain a silicon material; and
preparing an aggregate including a carbon material and the silicon material.

In the preparation method of the embodiment, the silicon source precursor is anionic doped by using the anion-containing inorganic salt. Since the anion-containing salt containing and the silicon source precursor both are water-soluble, they arrives uniform mixing in a molecular level during the hydrolyzing. Then drying, a part of anion remains in the hydrolysate; and finally, the anode material containing anion is obtained through the reducing.

In an embodiment, the silicon source precursor includes at least one of ethyl orthosilicate, methyl orthosilicate, sodium silicate, polysiloxane, trimethylethoxysilane, methyltrimethoxysilane, methyltriethoxysilane, and silsesquioxane.

In an embodiment, the anion includes at least one of F⁻, Cl⁻, Br⁻, NO₃⁻, SO₄²⁻, NO²⁻, and PO₄³⁻.

In an embodiment, the mixed solution further includes a first solvent, where the first solvent includes at least one of methanol, ethanol, ethylene glycol, propanol, isopropanol, glycerol, n-butanol, isobutanol, and pentanol.

In an embodiment, the mixed solution further includes a hydrolysis promoter.

In an embodiment, the mixed solution further includes a hydrolysis promoter, where the hydrolysis promoter includes at least one of ammonia water, urea, hydrochloric acid, sulfuric acid, sodium bicarbonate, sodium hydroxide, ammonium acetate, and ammonium chloride.

In an embodiment, the hydrolysis is performed under stirring, and has a duration of 3 h to 10 h.

In an embodiment, before hydrolyzing a mixed solution including a silicon source precursor and an anion-containing inorganic salt, the method further includes: mixing the anion-containing inorganic salt, a first solvent, and a hydrolysis promoter to form a first pre-mixture, mixing the silicon source precursor and the first solvent to form a second pre-mixture, and mixing the first pre-mixture and the second pre-mixture to obtain the mixed solution.

In an embodiment, the anion accounts a mass content of 5 wt% to 55 wt% in the first pre-mixture.

In an embodiment, the silicon source precursor accounts a mass content of 10 wt% to 70 wt% in the second pre-mixture.

In an embodiment, after hydrolyzing a mixed solution including a silicon source precursor and an anion-containing inorganic salt, the method further includes: removing the first solvent from the hydrolysate.

In an embodiment, a process of reducing the hydrolysate includes: fully mixing the hydrolysate with a reductive metal and sintering.

In an embodiment, a mass ratio of the hydrolysate and the reductive metal is 100: (13 to 130).

In an embodiment, the reductive metal includes at least one of aluminum, zinc, magnesium, sodium, lithium, calcium, and potassium.

In an embodiment, the sintering has a temperature of 600°C to 1200°C, and a duration of 1 h to 10 h.

In an embodiment, a protective gas is introduced during the sintering.

In an embodiment, the protective gas includes at least one of nitrogen, helium, neon, argon, and krypton.

In an embodiment, after mixing the hydrolysate with a reductive metal and sintering, the method further includes: acid-washing and drying a sintered product, where an acid solution used for the acid-washing includes at least one of hydrochloric acid, sulfuric acid, and nitric acid;

In an embodiment, a way for the fully mixing includes at least one of mechanical stirring, ultrasonic dispersion, and milling dispersion.

In an embodiment, the silicon material has a median particle size of 1 nm to 500 nm.

In an embodiment, a process of preparing an aggregate including a carbon material and the silicon material includes: subjecting a first precursor including a first carbon source and the silicon material to a primary heat treatment, to carbonize the first carbon source or to aggregate the first carbon source with the silicon material.

In an embodiment, a mass ratio of the silicon material and the first carbon source is (5 to 50): (15 to 80).

In an embodiment, the silicon material includes at least one of an elemental silicon, a silicon alloy, and a silicon oxide.

In an embodiment, the silicon material includes an elemental silicon and a silicon oxide layer present on surface of the elemental silicon, where the silicon oxide layer has a thickness of 1 nm to 50 nm.

In an embodiment, the first carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In an embodiment, the first carbon source includes at least one of artificial graphite, natural graphite, soft carbon, hard carbon, amorphous carbon, activated carbon, mesocarbon microbead, carbon nanotube, carbon nanofiber, graphene, and porous carbon.

In an embodiment, before subjecting a first precursor including a first carbon source and the silicon material to a primary heat treatment, the method further includes: fully dispersing the first carbon source, the first solvent, and the silicon material to form a second solution.

In an embodiment, the first solvent includes at least one of methanol, ethanol, ethylene glycol, propanol, isopropanol, glycerol, n-butanol, isobutanol, and pentanol.

In an embodiment, a way for the fully dispersing includes at least one of mechanical stirring, ultrasonic dispersion, and milling dispersion.

In an embodiment, a specific process of removing the second solvent includes: drying the second solution.

In an embodiment, the drying has a temperature of 40°C to 400°C, and a duration of 1 h to 15 h.

In an embodiment, the first carbon source includes at least one of artificial graphite, natural graphite, soft carbon, hard carbon, amorphous carbon, activated carbon, mesocarbon microbead, carbon nanotube, carbon nanofiber, graphene, and porous carbon. The primary heat treatment has a temperature of 400°C to 1000°C, and a duration of 1 h to 5 h.

In an embodiment, the first carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt. The primary heat treatment has a temperature of 500°C to 1000°C, and a duration of 1 h to 5 h.

In an embodiment, the primary heat treatment is performed in a protective atmosphere, where gas of the protective atmosphere includes at least one of nitrogen, helium, neon, argon, and krypton.

In an embodiment, the method further includes carbon-coating the aggregate.

In an embodiment, the method further includes carbon-coating the aggregate, where a process of the carbon-coating includes: mixing the aggregate with a second carbon source, and performing a second heat treatment.

In an embodiment, the method further includes carbon-coating the aggregate, where a process of the carbon-coating includes: mixing the aggregate with a second carbon source, and performing a second heat treatment, and the second carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In an embodiment, the method further includes carbon-coating the aggregate, where a process of the carbon-coating includes: mixing the aggregate with a second carbon source, and performing a second heat treatment, and a mass ratio of the aggregate and the second carbon source is (20 to 100): (10 to 80).

In an embodiment, the secondary heat treatment has a temperature of 800°C to 900°C, and a duration of 1 h to 5 h.

In a third aspect, the present disclosure provides a lithium ion battery including the anode material according to the first aspect, or the anode material prepared by the preparation method according to the second aspect.

The technical solution of the present disclosure has at least the following beneficial effects:

The anode material of the present disclosure includes an aggregate, the aggregate includes a carbon material and a silicon material, there is an anion present in the aggregate, and the anion accounts a mass content of 0.001 wt% to 0.5 wt% in the anode material. The anion generally exists at crystal lattice; defects of linear, surface and body; and surface, etc. Within a certain scope, the presence of the anion improves reactivity of these positions, which facilitates further transmission of a carrier, promotes diffusion of lithium ions and electrons in the material, and improves transmission efficiency of the carrier in the material, thereby improving rate performance, cycle performance and initial Coulombic efficiency of the anode material.

Secondly, in the preparation method of the present disclosure, the silicon source precursor is anionic doped by using the anion-containing inorganic salt. Since the salt containing an anion and the silicon source precursor both are water-soluble, they arrives uniform mixing in a molecular level during the hydrolyzing. Then drying, a part of anion remains in the hydrolysate; and finally, the anode material containing anion is obtained through the reducing.

The preparation method provided by the present disclosureis suitable for expanded production, the prepared anode material improves initial Coulombic efficiency of the silicon anode material, and reduce production cost.

### BRIEF DESCRIPTION OF DRAWINGS

FIG. 1 is a schematic flowchart of the preparation method of the anode material provided by Examples of the present disclosure;
FIG. 2 is a scanning electron microscope (SEM) photograph of the anode material prepared by Example 1 of the present disclosure;
FIG. 3 is an XRD pattern of the anode material prepared by Example 1 of the present disclosure;
FIG. 4 is a graph of initial charging and discharging curve of the anode material prepared by Example 1 of the present disclosure; and
FIG. 5 is a graph of cycle performance curve of the anode material prepared by Example 1 of the present disclosure.

### DETAIL DESCRIPTION OF EMBODIMENTS

Preferred embodiments of the present disclosure are described as follows, it should be noted that modifications and adaptations may be made to those skilled in the art without departing from the principles of the present disclosure, which are also deemed to fall within the scope of the present disclosure.

According to an anode material of an embodiment, the anode material includes an aggregate, the aggregate includes a carbon material and a silicon material, there is an anion present in the aggregate, and the anion accounts a mass content of 0.001 wt% to 0.5 wt% in the anode material.

The anode material of this embodiment includes an aggregate, the aggregate includes a carbon material and a silicon material, the aggregate includes an anion, and the anion accounts a mass content of 0.001 wt% to 0.5 wt% in the anode material. The anion generally exists at crystal lattice; defects of linear, surface and body; and surface, etc. Within a certain scope, the presence of the anion improves reactivity of these positions, which facilitates further transmission of a carrier, promotes diffusion of lithium ions and electrons in the material, and improves transmission efficiency of the carrier in the material, thereby improving rate performance, cycle performance and initial Coulombic efficiency of the anode material.

The anion accounts a mass content of 0.001 wt% to 0.5 wt% in the anode material, which may specifically be 0.001 wt%, 0.005 wt%, 0.008 wt%, 0.009 wt%, 0.01 wt%, 0.02 wt%, 0.03 wt%, 0.05 wt%, 0.08 wt%, 0.1 wt%, 0.2 wt%, 0.3 wt%, or 0.5 wt%, etc., or other value within the above range, which is not limited herein. If the anion has a too high content, a part of anion reacts with a lithium ion, binding a part of Li⁺, thereby degrading initial Coulombic efficiency and cycle life performance of the material. If the anion has a too low content, diffusion efficiencies of lithium ions and electrons are not significantly improved, thus electrochemical performance of the material is difficult to be improved.

In some embodiments, the anion includes at least one of F⁻, Cl⁻, Br⁻, NO₃⁻, SO₄²⁻, NO²⁻, and PO₄³⁻. According to numerous experiments, it has been found that the anions are preferably Cl⁻ or SO₄²⁻.

In some embodiments, the silicon material includes at least one of an elemental silicon, a silicon alloy, and a silicon oxide.

In some embodiments, the silicon alloy includes at least one of nickel silicon alloy, iron silicon alloy, magnesium silicon alloy, copper silicon alloy, silicon manganese alloy, and aluminum silicon alloy.

In some embodiments, the silicon material has a median particle size of 1 nm to 500 nm, which may specifically be 1 nm, 5 nm, 10 nm, 15 nm, 20 nm, 30 nm, 40 nm, 50 nm, 100 nm, 200 nm, 300 nm, 400 nm, or 500 nm, etc., or other value within the above range, which is not limited herein. According to numerous experiments, it has been found that the silicon material in nanoscale has strong structure stability, which inhibits volume expansion. However, the silicon material in nanoscale has a large surface energy, which tends to agglomeration during charging and discharging, and the silicon material has too small particle size, resulting in high production cost. Therefore, preferably, the silicon material has a median particle size of 1 nm to 200 nm, more preferably 1 nm to 100 nm.

In some embodiments, the silicon material includes an elemental silicon and a silicon oxide layer present on surface of the elemental silicon. The presence of the silicon oxide layer facilitates to protect silicon from being in contact with electrolyte, and in addition, buffers partial expansion of silicon, improving cycling stability.

The silicon oxide layer has a thickness of 1 nm to 50 nm, which may specifically be 1 nm, 5 nm, 10 nm, 15 nm, 20 nm, 25 nm, 30 nm, 38 nm, 40 nm, 48 nm, or 50 nm, etc., or other value within the above range, which is not limited herein.

In some embodiments, the carbon material includes at least one of artificial graphite, natural graphite, soft carbon, hard carbon, amorphous carbon, activated carbon, mesocarbon microbead, carbon nanotube, carbon nanofiber, graphene, and porous carbon.

In some embodiments, the anion is present in interstitial void of the silicon material, where the anion has an ion radius of 118 pm to 940 pm. By having an ion radius within this range, the anion partially enter the interstitial void of the silicon material to form lattice defects. These lattice defects provide additional channels for lithium ion transmission, promoting diffusion of lithium ions in the material, improving transmission efficiency of lithium ions in the material, and improving initial Coulombic efficiency of the anode material. The ion radius of the anion may specifically be 118 pm, 158 pm, 220 pm, 460 pm, 570 pm, 780 pm or 940 pm, which is not limited herein.

In some embodiments, the anion is present in interstitial void of the silicon material, where the anion includes at least one of F⁻, Cl⁻, and Br⁻. The anion has an ionic radius between 118 pm and 940 pm, part of which enters the interstitial void of the silicon material.

In some embodiments, the silicon material accounts a mass ratio of 10% to 80% in the anode material, which may specifically be 10%, 20%, 29%, 45%, 57%, 62%, 70%, 80%, etc., or other value within the above range, which is not limited herein.

Further, the anode material further includes a carbon layer coated on at least part of surface of the aggregate.

In some embodiments, the carbon layer is distributed on surface of the aggregate.

In some embodiments, a carbon material of the carbon layer includes amorphous carbon.

In some embodiments, the carbon layer has a thickness of 1 nm to 3000 nm. It is understood that, the carbon layer coated on surface of the aggregate reduces contact of the active material with electrolyte, reducing generation of a passivation film, increasing reversible capacity of the battery, and also inhibiting volume expansion caused by the silicon material.

Specifically,, the carbon layer has a thickness of 1 nm, 50 nm, 180 nm, 200 nm, 350 nm, 400 nm, 550 nm, 850 nm, 950 nm, 1050 nm, 1500 nm, 2000 nm, 2500 nm, or 3000 nm, etc., or other value within the above range, which is not limited herein. When the carbon layer is excessively thick, proportion of carbon is excessively high, which does not facilitate to obtain a high specific capacity composite; while when the carbon layer is excessively thin, it does not facilitate to increase conductivity of the anode material, and volume expansion inhibition performance of the material is weak, resulting in a poor long cycle performance. Preferably, the carbon layer has a thickness of 50 nm to 800 nm; more preferably, the carbon layer has a thickness of 100 nm to 500 nm.

In some embodiments, the carbon material accounts a mass ratio of 10% to 60% in the anode material, which may specifically be 10%, 20%, 25%, 29%, 34%, 45%, 57%, 60%, etc., or other value within the above range, which is not limited herein. It should be noted that this mass ratio of the carbon material involves a carbon material in the aggregate and a carbon material in the carbon layer.

In some embodiments, the anode material has a median particle size of 0.5 µm to 30 µm, which may specifically be 0.5 µm, 1 µm, 5 µm, 8 µm, 10 µm, 13 µm, 15 µm, 18 µm, 20 µm, 25 µm, or 30 µm, etc., or other value within the above range, which is not limited herein. It is understood that controlling the median particle size of the anode material within the above range facilitates to improve cycle performance of the anode material.

In some embodiments, the anode material has a specific surface area of ≤ 10 m²/g, which may specifically be 10 m²/g, 8 m²/g, 7 m²/g, 5 m²/g, 3 m²/g, 2 m²/g, 1 m²/g or 0.5 m²/g, or the like, etc., or other value within the above range, which is not limited herein. It is understood that controlling the specific surface area of the anode material within the above range facilitates to inhibit volume expansion, and to improve cycle performance of the anode material.

It should be noted that without contradicting each other, the anode materials of the above embodiments may be arbitrarily combined, for example, the breaking strength and the porosity of the anode material particles can be combined limited, etc.

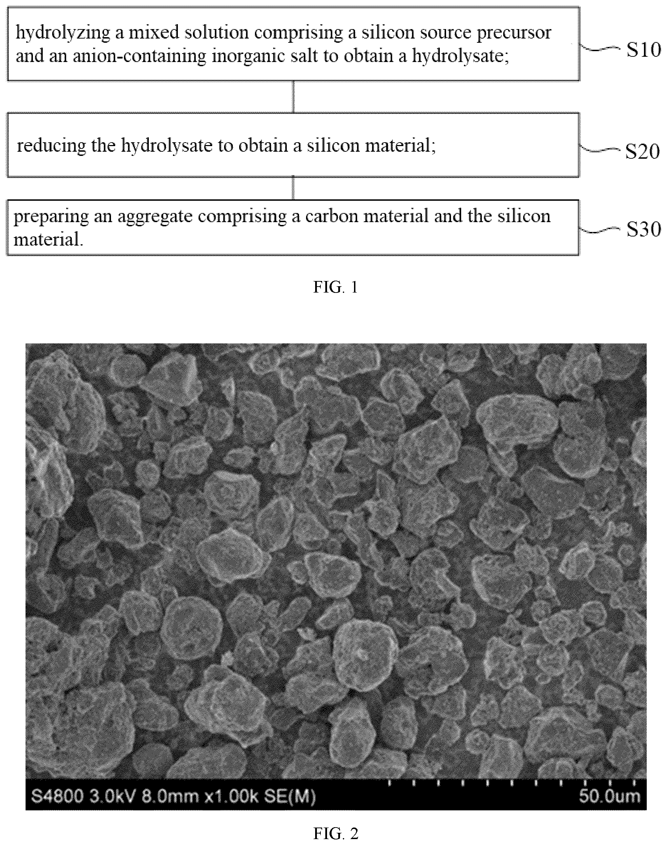

In another aspect, the present disclosure provides a preparation method of an anode material, as shown in FIG. 1, including the following steps:
step S10, hydrolyzing a mixed solution including a silicon source precursor and an anion-containing inorganic salt to obtain a hydrolysate;
step 20, reducing the hydrolysate to obtain a silicon material; and
step 30, preparing an aggregate including a carbon material and the silicon material.

In the preparation method provided by the present disclosure, the silicon source precursor is anionic doped by using the anion-containing inorganic salt. Since the salt containing an anion and the silicon source precursor both are water-soluble, they arrives uniform mixing in a molecular level during the hydrolyzing. Then drying, a part of anion remains in the hydrolysate; and finally, the anode material containing anion is obtained through the reducing.

The preparation method of the present disclosure is specifically described below with reference to the embodiments.
step S10, hydrolyzing a mixed solution including a silicon source precursor and an anion-containing inorganic salt to obtain a hydrolysate.

In some embodiments, the mixed solution further includes a first solvent and a hydrolysis promoter. Specifically, the silicon source precursor, the anion-containing inorganic salt, the hydrolysis promoter and the first solvent are mixed by grade-mixing. Specifically, mixing the anion-containing inorganic salt, a first solvent, and a hydrolysis promoter to form a first pre-mixture, mixing the silicon source precursor and the first solvent to form a second pre-mixture, and mixing the first pre-mixture and the second pre-mixture, so as to achieve grade-mixing. It is understood that those skilled in the art may select an appropriate grade-mixing process on the basis of the grade-mixing concept according to specific components of the active material, the first carbon source and the solvent, so as to fully mix the active materials.

In some embodiments, the inorganic salt has a chemical formula of MR, where metal M is selected from at least one of Zn, K, Na, Al, Mg, Ca, and Li, and anion R includes at least one of F⁻, Cl⁻, Br⁻, NO₃⁻, SO₄²⁻, NO²⁻, and PO₄³⁻.

In some embodiments, the anion R accounts a mass content of 5wt% to 55 wt% in the first pre-mixture, which may specifically be 5 wt%, 10 wt%, 15 wt%, 20 wt%, 25 wt%, 30 wt%, 35 wt%, 45 wt%, or 55 wt%, etc., or other value within the above range, which is not limited herein.

In some embodiments, the silicon source precursor accounts a mass content of 10 wt% to 70 wt% in the second pre-mixture is, which may specifically be 10 wt%, 15 wt%, 20 wt%, 25 wt%, 30 wt%, 35 wt%, 45 wt%, 55 wt%, 60 wt%, or 70 wt%, etc., or other value within the above range, which is not limited herein.

In some embodiments, the silicon source precursor includes at least one of ethyl orthosilicate, methyl orthosilicate, sodium silicate, polysiloxane, trimethylethoxysilane, methyltrimethoxysilane, methyltriethoxysilane, and silsesquioxane.

In some embodiments, the first solvent includes at least one of methanol, ethanol, ethylene glycol, propanol, isopropanol, glycerol, n-butanol, isobutanol, and pentanol.

In some embodiments, the hydrolysis promoter includes at least one of ammonia water, urea, hydrochloric acid, sulfuric acid, sodium bicarbonate, sodium hydroxide, ammonium acetate, and ammonium chloride.

In some embodiments, the hydrolysis is performed under stirring, and has a duration of 3 h to 10 h.

By controlling mass ratio of the raw materials and the hydrolysis duration and temperature, the silicon source precursor is fully hydrolyzed to obtain the anion-containing silicon oxide material.

In some embodiments, after hydrolyzing a mixed solution including a silicon source precursor and an anion-containing inorganic salt, the method further includes: removing the first solvent from the hydrolysate.

Specifically, filtering and drying the hydrolysate.

In some embodiments, a way for the the filtering is vacuum filtration, filter paper filtration, etc.

In some embodiments, the drying has a temperature of 40°C to 600°C, which may specifically be 40°C, 50°C, 80°C, 100°C, 120°C, 250°C, 380°C, 400°C, 500°C, 580°C, or 600°C, etc., and a duration of 1 h to 15 h, which may specifically be 1 h, 3 h, 5 h, 7 h, 9 h, 10 h, 12 h, or 15 h, etc. A way for the drying is, for example, in-furnace drying, freeze drying, blending steam, spray drying, etc. The drying in the embodiment removes the solvent in hydrolysate as much as possible.

Step 20, reducing the hydrolysate to obtain a silicon material.

In some embodiments, a process of reducing the hydrolysate includes: fully mixing the hydrolysate with a reductive metal and sintering.

In some embodiments, a mass ratio of the hydrolysate and the reductive metal is 100: (13 to 130), which may specifically be 100:13, 100:18, 100:28, 100:45, 100:68, 100:88, 100:94, 100: 100, or 100: 130, etc., or other value within the above range, which is not limited herein. When the amount of the reductive metal is large, the hydrolysate may be reduced to silicon and silicon alloy, and when the amount of the reductive metal is small, the hydrolysate may be reduced to silicon and silicon oxide.

In some embodiments, a way for the fully mixing includes at least one of mechanical stirring, ultrasonic dispersion, and milling dispersion. Preferably, milling dispersion is adopted, so as to effectively disperse the anion-containing silicon oxide material, preventing the anion-containing silicon oxide material from being agglomerated together, and promoting the silicon oxide material to be dispersed into smaller nanoparticles. Preferably, wet ball milling is adopted, with a dispersion time controlled to 0.5 h to 10 h. By fully milling, components are mixed more uniformly, so that a median particle size of the anion-containing silicon oxide material achieves 1 nm to 500 nm.

In some embodiments, the reductive metal includes at least one of aluminum, zinc, magnesium, sodium, lithium, calcium, and potassium.

In some embodiments, the sintering has a temperature of 600°C to 1200°C, which may specifically be 600°C, 650°C, 700°C, 800°C, 820°C, 950°C, 980°C, 1000°C, 1100°C, 1150°C, or 1200°C, etc., and a duration of 1 h to 10 h, which specifically may be 1 h, 3 h, 5 h, 6 h, 7 h, 8 h, 9 h, or 10 h, etc.

In some embodiments, a protective gas is introduced during the sintering process.

In some embodiments, the protective gas includes at least one of nitrogen, helium, neon, argon, and krypton.

In some embodiment, after mixing the hydrolysate with a reductive metal and sintering, the method further includes: acid-washing and drying a sintered product.

Specifically, an acid solution used for the acid-washing includes at least one of hydrochloric acid, sulfuric acid, and nitric acid. Through acid-washing, a metal impurity is removed, and a layer of silicon oxide is formed on the surface.

In some embodiments, the drying has a temperature of 40°C to 400°C, which may specifically be 40°C, 50°C, 80°C, 100°C, 200°C, 300°C, 400°C, etc., and a duration of 1 h to 15 h, which may specifically be 1 h, 3 h, 5 h, 7 h, 9 h, 10 h, 12 h, or 15 h, etc. A way for the drying is, for example, in-furnace drying.

The dried first precursor may also be dispersed, and the dispersion may be milling dispersion, with a duration of 0.5 h to 9 h, which may specifically be 0.5 h, 1.5 h, 2.5 h, 3.5 h, 4.5 h, 5.5 h, 7.5 h, or 9 h, etc. The milling dispersion in the embodiment controls particle size of anion-containing nano-silicon after dispersion.
step 30, preparing an aggregate including a carbon material and the silicon material.

In some embodiments, step S30 specifically includes: subjecting a first precursor including a first carbon source and the silicon material to a primary heat treatment, to carbonize the first carbon source or to aggregate the first carbon source with the silicon material.

In some embodiments, a mass ratio of the silicon material and the first carbon source is (5 to 50): (15 to 80), which may specifically be 5:15, 15:15, 25:15, 30:15, 50:15, 25:40, 25:50, 30:65, 50:75 or 50:80, etc., or other value within the above range, which is not limited herein.

In some embodiments, the first carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In some embodiments, the first carbon source includes at least one of artificial graphite, natural graphite, soft carbon, hard carbon, amorphous carbon, activated carbon, mesocarbon microbead, carbon nanotube, carbon nanofiber, graphene, and porous carbon.

In some embodiments, before subjecting a first precursor including a first carbon source and the silicon material to a primary heat treatment, the method further includes: fully dispersing the first carbon source, the first solvent, and the silicon material to form a second solution.

In some embodiments, the first solvent includes at least one of methanol, ethanol, ethylene glycol, propanol, isopropanol, glycerol, n-butanol, isobutanol, and pentanol.

In some embodiments, a way for the fully dispersing includes at least one of mechanical stirring, ultrasonic dispersion, and milling dispersion.

In some embodiments, a specific process of removing the second solvent includes: drying the second solution.

In some embodiments, the drying has a temperature of 40°C to400 °C, which may specifically be 40°C, 50°C, 80°C, 100°C, 200°C, 300°C, 400°C, etc, and a duration of 1 h to 15 h, which may specifically be 1 h, 3 h, 5 h, 7 h, 9 h, 10 h, 12 h, or 15 h, etc. A way for the drying is, for example, in-furnace drying.

In some embodiments, the first carbon source includes at least one of artificial graphite, natural graphite, soft carbon, hard carbon, amorphous carbon, activated carbon, mesocarbon microbead, carbon nanotube, carbon nanofiber, graphene, and porous carbon. The primary heat treatment has a temperature of 400°C to 1000°C, which may specifically be 400°C, 450°C, 510°C, 620°C, 730°C, 840°C, 850°C, 870°C, 890°C, 900°C, 950°C, 1000°C, etc., or other value within the above range, which is not limited herein. The primary heat treatment has a duration of 1 h to 5 h, which may specifically be 1 h, 1.5 h, 2 h, 2.5 h, 3 h, 3.5 h, 4 h, or 5 h, etc.

In some embodiments, the first carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt. The primary heat treatment has a temperature of 500°C to 1000°C, which may specifically be 500°C, 510°C, 620°C, 730°C, 840°C, 850°C, 870°C, 890°C, 900°C, 950°C, 1000°C, etc., or other value within the above range, which is not limited herein. The primary heat treatment has a duration of 1 h to 5 h, which may specifically be 1 h, 1.5 h, 2 h, 2.5 h, 3 h, 3.5 h, 4 h, or 5 h.

In some embodiments, the primary heat treatment is performed in a protective atmosphere.

In some embodiments, the primary heat treatment is performed in a protective atmosphere, where gas of the protective atmosphere includes at least one of nitrogen, helium, neon, argon, and krypton.

Step S40, carbon-coating the aggregate, to obtain an anode material.

It is noted that the anode material of the present embodiment may not be carbon coated, in this case the step S50 may be omitted.

In some embodiments, a specific process of the carbon-coating is: mixing the aggregate with a second carbon source, and performing a second heat treatment.

In some embodiments, the second carbon source includes at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt.

In some embodiments, a mass ratio of the aggregate and the second carbon source is (20 to 100): (10 to 80). The mass ratio of the aggregate and the second carbon source may be 20:10, 30:15, 50:60, 80:30, 90:20, 100: 10, etc., or other value within the above range, which is not limited herein.

In some embodiments, a way for the second heat treatment is, for example, vacuum sintering, hot pressing sintering, or atmospheric sintering. The secondary heat treatment has a temperature of 800°C to 900°C, which may specifically be 800°C, 810°C, 820°C, 830°C, 840°C, 850°C, 860°C, 870°C, 880°C, 890°C, 900°C, etc., or other value within the above range, which is not limited herein.

In some embodiments, the second heat treatment has a duration of 1 h to 5 h; which may specifically be 1 h, 2 h, 3 h, 4 h, 5 h, etc., or other value within the above range, which is not limited herein.

In some embodiments, the second heat treatment is performed in a protective atmosphere, where gas of the protective atmosphere includes at least one of nitrogen, helium, neon, argon, and krypton.

In some embodiments, after the second heat treatment, performing at least one of crushing, sieving, and demagnetizing . Preferably, after the second heat treatment, performing crushing, sieving, and demagnetizing in sequence.

In some embodiments, a way for the crushing is employing any one of a mechanical crusher, a gas flow crusher, and a low temperature crusher.

In some embodiments, a way for the sieving is employing any one of a fixed sieve, a drum sieve, a resonance sieve, a roller sieve, a vibrating sieve, and a chain sieve. A mesh count by the sieving is ≥ 500 meshes, and specifically 500 meshes, 600 meshes, 700 meshes and 800 meshes, etc. Controlling particle size of the anode material within the above range facilitates to improve cycle performance of the anode material.

In some embodiments, a device for the demagnetizing is any one of a permanent magnet drum magnetic separator, an electromagnetic iron remover, and a pulsating high gradient magnetic separator. The demagnetizing is to control final magnetic substance content of the anode material, for avoiding adverse impact of the magnetic substance on discharge effect of lithium ion battery and safety of the battery during use.

It should be noted that, there is an anion present in the aggregate of the present disclosure, meanwhile there is a cation in the aggregate, too, so that the anode material maintains charge balance in whole. Specifically, an inorganic salt raw material used in the preparation process has different cation types, with different radius. The cations having a radius smaller than the interstitial void of the silicon material partly occupy position of silicon atom in the silicon material, and the cations having a radius larger than the interstitial void of the silicon material partly enter the interstitial void of the silicon material and also partly enter the carbon material.

In a third aspect, the present disclosure provides a lithium ion battery including the anode material according to the first aspect, or the anode material prepared by the preparation method according to the second aspect.

The median particle size in the present disclosure refers to an average particle size, the physical meaning of which is a particle size when cumulative particle size distribution percentage of the particles reaches 50%, tested by a Malvern particle size analyzer. The Malvern particle size analyzer uses scattering phenomenon of the particles to light, to comprehensively calculate the particle size distribution of the particles under test according to distribution of scattered light energy.

The embodiments of the present disclosure are further illustrated by the following several examples. The embodiments herein are not limited to the specific examples described below. Variations may be made appropriately without changing the scope of the independent claims.

### Example 1

The preparation method of the anode material of this example included the following steps:
(1) ZnCl₂, ethanol, water, and ammonia water were mixed in a mass ratio of 5:48:17:4 to obtain a first pre-mixture. Ethyl orthosilicate and ethanol were mixed in a mass ratio of 3.1:30 to prepare a second pre-mixture. The first pre-mixture was slowly added into the second pre-mixture, stirred for 4 h to obtain a first solution, and centrifuged to obtain a Cl⁻-containing silicon oxide;
(2) the silicon oxide was dried and mixed with metal magnesium powder in a mass ratio of 100:84, then sintered at 900°C for 4 h in a heat treatment furnace. The sintered product was acid-washed by hydrochloric acid and dried, to obtain a Cl⁻-containing silicon material, with a median particle size of 120 nm;
(3) the Cl⁻-containing silicon material and sucrose in a mass ratio of 70:35.9 were added into an n-butanol solution, underwent an ultrasonic process for 50 min, and treated in a high-speed disperser for 2 h, to obtain a second solution. The second solution was stirred and evaporated to dryness at 100°C, to obtain a first precursor; and
(4) the first precursor was mixed with fructose in a mass ratio of 100:35, then the mixture was placed in a high-temperature box furnace, fed with nitrogen, preformed a heat treatment at 800°C for 3 h, crushed, and sieved through a 500 mesh sieve, to obtain an anode material.

The anode material prepared in this example includes an aggregate and a carbon layer coated on surface of the aggregate, the aggregate includes a carbon material and a silicon material, and the silicon material is an elemental silicon in nanoscale and a silicon oxide layer present on surface of the elemental silicon, where the silicon oxide layer has a thickness of 10 nm. The anode material has a median particle size of 14 µm and a specific surface area of 2.2 m²/g, and the carbon layer has an average thickness of 460 nm. There is Cl⁻ present in the aggregate and the interstitial void of the silicon material, and the Cl⁻ accounts a mass content of 590 ppm in the anode material.

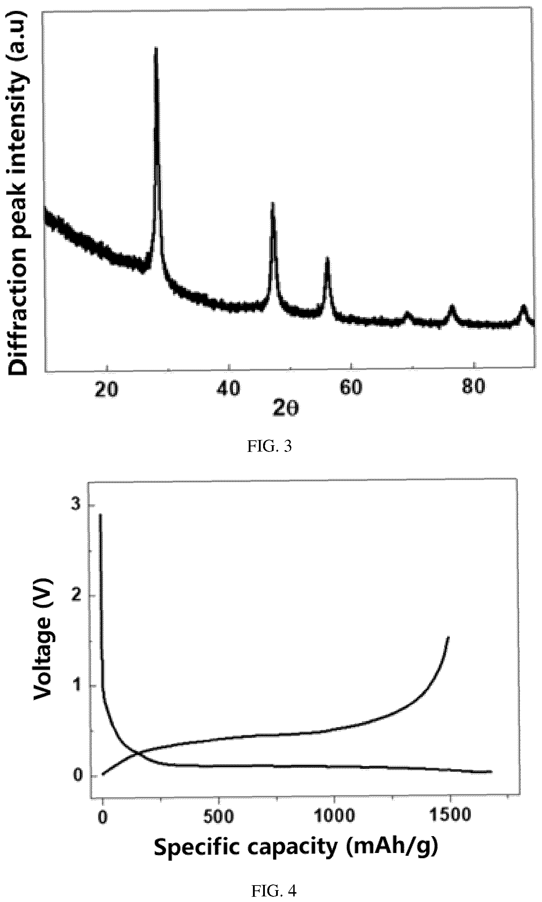

FIG. 2 is a scanning electron microscope (SEM) photograph of the anode material prepared by this example, and FIG. 3 is an XRD pattern of the anode material prepared by this example. As shown in FIG. 3, the anode material has obvious silicon characteristic peaks.

### Example 2

The preparation method of the anode material of this example included the following steps:
(1) Na₂SO₄, ethanol, water, and ammonia water were mixed in a mass ratio of 6:48:16:4 to obtain a first pre-mixture. Ethyl orthosilicate and ethanol were mixed in a mass ratio of 5.1:30 to prepare a second pre-mixture. The first pre-mixture was slowly added into the second pre-mixture, stirred for 4 h to obtain a first solution, and centrifuged to obtain a SO₄²⁻-containing silicon oxide;
(2) the silicon oxide was dried and mixed with metal zinc powder in a mass ratio of 100:75, then sintered at 800°C for 4 h in a heat treatment furnace. The sintered product was acid-washed by sulfuric acid and dried, to obtain a SO₄²⁻-containing silicon material, with a median particle size of 200 nm;
(3) the SO₄²⁻-containing silicon material and sucrose in a mass ratio of 60:35.9 were added into an n-butanol solution, underwent an ultrasonic process for 60 min, and treated in a high-speed disperser for 5 h, to obtain a second solution. The second solution was stirred and evaporated to dryness at 100°C, to obtain a first precursor; and
(4) the first precursor was mixed with fructose in a mass ratio of 70:35, then the mixture was placed in a high-temperature box furnace, fed with nitrogen, preformed a heat treatment at 900°C for 3 h, crushed, and sieved through a 500 mesh sieve, to obtain an anode material.

The anode material prepared in this example includes an aggregate and a carbon layer coated on surface of the aggregate, the aggregate includes a carbon material and a silicon material, and the silicon material is an elemental silicon and a silicon oxide layer present on surface of the elemental silicon, where the silicon oxide layer has a thickness of 20 nm. The anode material has a median particle size of 12 µm and a specific surface area of 3.2 m²/g, and the carbon layer has an average thickness of 560 nm. There is SO₄²⁻ present in the aggregate and the interstitial void of the silicon material, and the SO₄²⁻ accounts a mass content of 980 ppm in the anode material.

### Example 3

The preparation method of the anode material of this example included the following steps:
(1) KF, ethanol, water, and ammonia water were mixed in a mass ratio of 3:55:16:5 to obtain a first pre-mixture. Ethyl orthosilicate and ethanol were mixed in a mass ratio of 5.0:35 to prepare a second pre-mixture. The first pre-mixture was slowly added into the second pre-mixture, stirred for 4 h to obtain a first solution, and centrifuged to obtain a F⁻-containing silicon oxide;
(2) the silicon oxide was dried and mixed with metal sodium powder in a mass ratio of 100:75, then sintered at 500°C for 4 h in a heat treatment furnace. The sintered product was acid-washed by hydrochloric acid and dried, to obtain a F⁻-containing silicon material, with a median particle size of 80 nm;
(3) the F⁻-containing silicon material and sucrose in a mass ratio of 90:30.9 were added into an n-butanol solution, underwent an ultrasonic process for 60 min, and treated in a high-speed disperser for 4 h, to obtain a second solution. The second solution was stirred and evaporated to dryness at 100°C, to obtain a first precursor; and
(4) the first precursor was mixed with fructose in a mass ratio of 80:35, then the mixture was placed in a high-temperature box furnace, fed with nitrogen, preformed a heat treatment at 890°C for 3 h, crushed, and sieved through a 500 mesh sieve, to obtain an anode material.

The anode material prepared in this example includes an aggregate and a carbon layer coated on surface of the aggregate, the aggregate includes a carbon material and a silicon material, and the silicon material is an elemental silicon and a silicon oxide layer present on surface of the elemental silicon, where the silicon oxide layer has a thickness of 10 nm. The anode material has a median particle size of 11 µm and a specific surface area of 1.2 m²/g, and the carbon layer has an average thickness of 760 nm. There is F⁻ present in the aggregate and the interstitial void of the silicon material, and the F⁻ accounts a mass content of 280 ppm in the anode material.

### Example 4

The preparation method of the anode material of this example included the following steps:
(1) KCl, Mg(NO₃), ethanol, water, and ammonia water were mixed in a mass ratio of 3:7:55:16:5 to obtain a first pre-mixture. Methyl orthosilicate and ethanol were mixed in a mass ratio of 5.5:39 to prepare a second pre-mixture. The first pre-mixture was slowly added into the second pre-mixture, stirred for 5 h to obtain a first solution, and centrifuged to obtain a Cl⁻ and NO₃²⁻-containing silicon oxide;
(2) the silicon oxide was dried and mixed with metal magnesium powder in a mass ratio of 100:70, then sintered at 800°C for 4 h in a heat treatment furnace. The sintered product was acid-washed by hydrochloric acid and dried, to obtain a Cl⁻ and N0₃²⁻-containing silicon material, with a median particle size of 50 nm;
(3) the Cl⁻ and NO₃²⁻-containing silicon material and fructose in a mass ratio of 90:30.9 were added into a propanol solution, underwent an ultrasonic process for 60 min, and treated in a high-speed disperser for 2 h, to obtain a second solution. The second solution was stirred and evaporated to dryness at 100°C, to obtain a first precursor; and
(4) the first precursor was mixed with polyvinyl chloride in a mass ratio of 90:55, then the mixture was placed in a high-temperature box furnace, fed with nitrogen, preformed a heat treatment at 990°C for 8 h, crushed, and sieved through a 500 mesh sieve, to obtain an anode material.

The anode material prepared in this example includes an aggregate and a carbon layer coated on surface of the aggregate, the aggregate includes a carbon material and a silicon material, and the silicon material is an elemental silicon and a silicon oxide layer present on surface of the elemental silicon, where the silicon oxide layer has a thickness of 15 nm. The anode material has a median particle size of 12.7 µm and a specific surface area of 1.9 m²/g, and the carbon layer has an average thickness of 460 nm. There are Cl⁻ and NO₃²⁻ present in the aggregate, and there is Cl⁻ present in the interstitial void of the silicon material, and the Cl⁻and NO₃²⁻ account a total mass content of 2180 ppm in the anode material.

### Example 5

The preparation method of the anode material of this example included the following steps:
(1) NaBr, Li2_{S}O₄, ethanol, water, and ammonia water were mixed in a mass ratio of 2:2:51:14:5 to obtain a first pre-mixture. Ethyl orthosilicate and ethanol were mixed in a mass ratio of 3.5:39 to prepare a second pre-mixture. The first pre-mixture was slowly added into the second pre-mixture, stirred for 2 h to obtain a first solution, and centrifuged to obtain a Br⁻and SO₄²⁻-containing silicon oxide;
(2) the silicon oxide was dried and mixed with metal magnesium powder in a mass ratio of 100:70, then sintered at 800°C for 4 h in a heat treatment furnace. The sintered product was acid-washed by sulfuric acid and dried, to obtain a Br⁻ and SO₄²⁻-containing silicon material, with a median particle size of 300 nm;
(3) the Br⁻ and SO₄²⁻-containing silicon material and sucrose in a mass ratio of 70:50.9 were added into an n-pentanol solution, underwent an ultrasonic process for 60 min, and ball milled in a planetary ball mill for 4 h, to obtain a second solution. The second solution was stirred and evaporated to dryness at 100°C, to obtain a first precursor; and
(4) the first precursor was mixed with phenolic resin in a mass ratio of 92:45, then the mixture was placed in a high-temperature box furnace, fed with nitrogen, preformed a heat treatment at 1000°C for 2 h, crushed, and sieved through a 500 mesh sieve, to obtain an anode material.

The anode material prepared in this example includes an aggregate and a carbon layer coated on surface of the aggregate, the aggregate includes a carbon material and a silicon material, and the silicon material is an elemental silicon and a silicon oxide layer present on surface of the elemental silicon, where the silicon oxide layer has a thickness of 20 nm. The anode material has a median particle size of 9.5 µm and a specific surface area of 2.9 m²/g, and the carbon layer has an average thickness of 960 nm. There are Br⁻ and SO₄²⁻ present in the aggregate, and there is Br⁻ present in the interstitial void of the silicon material, and the Br⁻ and SO₄²⁻ account a total mass content of 1080 ppm in the anode material.

### Example 6

(1) ZnCl₂, ethanol, water, ammonia water, and ethyl orthosilicate were mixed in a mass ratio of 5:48:17:4:3.1 to obtain a first solution, stirred for 4 h, and centrifuged to obtain a Cl⁻-containing silicon oxide;
(2) the silicon oxide was dried and mixed with metal magnesium powder in a mass ratio of 100: 131, then sintered at 900°C for 4 h in a heat treatment furnace. The sintered product was acid-washed by hydrochloric acid and dried, to obtain a Cl⁻-containing silicon material, with a median particle size of 120 nm;
(3) the Cl⁻-containing silicon material and sucrose in a mass ratio of 70:35.9 were added into an n-butanol solution, underwent an ultrasonic process for 50 min, and treated in a high-speed disperser for 2 h, to obtain a second solution. The second solution was stirred and evaporated to dryness at 100°C, to obtain a first precursor; and
(4) the first precursor was mixed with fructose in a mass ratio of 100:35, then the mixture was placed in a high-temperature box furnace, fed with nitrogen, preformed a heat treatment at 800°C for 3 h, crushed, and sieved through a 500 mesh sieve, to obtain an anode material.

The anode material prepared in this example includes an aggregate and a carbon layer coated on surface of the aggregate, and the aggregate includes a carbon material and a silicon material, and the silicon material includes an elemental silicon alloy and a magnesium silicon alloy. The anode material has a median particle size of 12 µm and a specific surface area of 2.3 m²/g, and the carbon layer has an average thickness of 500 nm. There is Cl⁻ present in the aggregate and the interstitial void of the silicon material, and the Cl⁻ accounts a mass content of 550 ppm in the anode material.

### Example 7

The preparation method of the anode material of this example included the following steps:
(1) ZnCl₂, ethanol, water, and ammonia water were mixed in a mass ratio of 5:48:17:4 to obtain a first pre-mixture. Ethyl orthosilicate and ethanol were mixed in a mass ratio of 3.1:30 to prepare a second pre-mixture. The first pre-mixture was slowly added into the second pre-mixture, stirred for 4 h to obtain a first solution, and centrifuged to obtain a Cl⁻-containing silicon oxide;
(2) the silicon oxide was dried and mixed with metal aluminum powder in a mass ratio of 100: 140, then sintered at 900°C for 4 h in a heat treatment furnace. The sintered product was acid-washed by hydrochloric acid and dried, to obtain a Cl⁻-containing silicon material, with a median particle size of 450 nm;
(3) the Cl⁻-containing silicon material and sucrose in a mass ratio of 70:35.9 were added into an n-butanol solution, underwent an ultrasonic process for 50 min, and treated in a high-speed disperser for 2 h, to obtain a second solution. The second solution was stirred and evaporated to dryness at 100°C, to obtain a first precursor; and
(4) the first precursor was placed in a high-temperature box furnace, fed with nitrogen, preformed a heat treatment at 800°C for 3 h, crushed, and sieved through a 500 mesh sieve, to obtain an aggregate.

The anode material prepared in this example includes an aggregate, the aggregate includes a carbon material and a silicon material, and the silicon material includes an elemental silicon and an aluminum silicon alloy. The anode material has a median particle size of 12 µm and a specific surface area of 3.0 m²/g, and the carbon layer has an average thickness of 559 nm. There is Cl⁻ present in the aggregate and the interstitial void of the silicon material, and the Cl⁻ accounts a mass content of 2500 ppm in the anode material.

### Example 8

Example 8 was conducted substantially in the same way as in Example 1, except that: in step (2), the sintering temperature was 500°C.

The anode material prepared in this example includes an aggregate, the aggregate includes a carbon material and a silicon material, and the silicon material is an elemental silicon and a silicon oxide layer present on surface of the elemental silicon, where the silicon oxide layer has a thickness of 10 nm. The anode material has a median particle size of 13 µm and a specific surface area of 2.1 m²/g, and the carbon layer has an average thickness of 490 nm. There is Cl⁻ present in the aggregate and the interstitial void of the silicon material, and the Cl⁻accounts a mass content of 620 ppm in the anode material.

### Example 9

Example 9 was conducted substantially in the same way as in Example 1, except that: in step (2), no acid-washing was performed.

The anode material prepared in this example includes an aggregate, the aggregate includes a carbon material and a silicon material, and the silicon material is an elemental silicon. The anode material has a median particle size of 17 µm and a specific surface area of 3.2 m²/g, and the carbon layer has an average thickness of 560 nm. There is Cl⁻ present in the aggregate and the interstitial void of the silicon material, and the Cl⁻ accounts a mass content of 290 ppm in the anode material.

### Comparative Example 1

An anode material was prepared substantially in the same way as in Example 1, except that: ZnCl₂, ethanol, water, and ammonia water were mixed in a mass ratio of 10:48:17:4 to obtain a first pre-mixture.

The anode material prepared in this comparative example includes an aggregate, the aggregate includes a carbon material and a silicon material, and the silicon material is an elemental silicon and a silicon oxide layer present on surface of the elemental silicon, where the silicon oxide layer has a thickness of 10 nm. The anode material has a median particle size of 19 µm and a specific surface area of 3.0 m²/g, and the carbon layer has an average thickness of 620 nm. There is Cl⁻ present in the aggregate and the interstitial void of the silicon material, and the Cl⁻ accounts a mass content of 5970 ppm in the anode material.

### Comparative Example 2

An anode material was prepared substantially in the same way as in Example 1, except that: ZnCl₂, ethanol, water, and ammonia water were mixed in a mass ratio of 0.5:48:17:4 to obtain a first pre-mixture.

The anode material prepared in this comparative example includes an aggregate, the aggregate includes a carbon material and a silicon material, and the silicon material is an elemental silicon and a silicon oxide layer present on surface of the elemental silicon, where the silicon oxide layer has a thickness of 10 nm. The anode material has a median particle size of 20 µm and a specific surface area of 3.8 m²/g, and the carbon layer has an average thickness of 580 nm. There is Cl⁻ present in the aggregate and the interstitial void of the silicon material, and the Cl⁻ accounts a mass content of 9 ppm in the anode material.

### Comparative Example 3

An anode material was prepared substantially in the same way as in Example 1, except that: no chloride was added.

The anode material prepared in this comparative example includes an aggregate and a carbon layer coated on surface of the aggregate, the aggregate includes a silicon material and a carbon material, and the silicon material is an elemental silicon and a silicon oxide layer present on surface of the elemental silicon, where the silicon oxide layer has a thickness of 14 nm. The anode material has a median particle size of 10 µm and a specific surface area of 2.9 m²/g, and the carbon layer has an average thickness of 440 nm. There is no Cl⁻ present in the aggregate.

### Test Method

### (1) Test method for median particle size of the anode material:

The median particle size, i.e., average particle size, of the anode material was tested by a Malvern laser particle size analyzer.

### (2) Test method for specific surface area of the anode material:

The specific surface area of the anode material was tested by using a Micromeritics Tristar 3020 specific surface area and pore size analyzer. A certain mass of powder was weighed, and complete degassed under vacuum heating. After removing surface adsorbate, specific surface area of the particles was calculated by amount of adsorbed nitrogen using nitrogen adsorption method.

### (3) Test Method for thickness of carbon layer of the anode material:

The material was cut by a focused ion beam microscopy (FIB-SEM) , and the obtained carbon layer was measured for an average thickness in a scanning electron microscope image.

### (4) Test Method for type and content of anion in the anode material:

The type and content of anion present in the anode material were tested by an ion chromatography.

### (5) Test method for anion in interstitial void of the silicon material:

The anode material was tested by using a Nano-SIMS, indicating the presence of anion in the interstitial void of the silicon material if an incident bombardment ion beam energy was above 140 ev.

### (6) Electrochemical Test

The electrochemical cycle performances were tested by the following processes: the prepared silicon carbon composite anode material, a conductive agent, and a binders were dissolved in a solvent in a mass percent of 94:1:5 for mixing, with a solid content controlled to be 50%, then applied to a copper foil current collector, and vacuum dried, to prepare an anode plate; and then lithium ion button batteries were assembled by conventional production process by further using a ternary cathode plate prepared by a conventional production process, 1 mol/L of electrolyte including LiPF₆/(ethylene carbonate + dimethyl carbonate + methyl ethyl carbonate (v/v=1:1:1)), Celgard 2400 separator, and shell. An initial thickness H0 of the plates of the lithium ion batteries was measured by using a micrometer. The test for charging and discharging of the lithium ion batteries was performed by a LAND cell test system produced by Wuhan Jinnuo Electronics Co., Ltd, under room temperature, for charging and discharging at 0.2C constant current, and the charging and discharging voltage was controlled to 2.75 V to 4.2 V, thus obtaining an initial reversible capacity, an initial charging capacity, and an initial discharging capacity. The initial Coulombic efficiency = the initial discharging capacity / the initial charging capacity.

The cycling was repeated for 100 times, and an discharging capacity was recorded as remaining capacity of the lithium ion batteries, thus an capacity retention = the remaining capacity / the initial capacity × 100%.

The results of the above performance test are as follows:

**Table 1. Performance Comparison Results**

| samples | anion content (wt%) | initial reversible capacity (mAh/g) | initial Coulombic efficiency (%) | capacity retention after 100 cycles (%) |
|---|---|---|---|---|
| Example 1 | 0.0059 | 1344 | 88.8 | 93.7 |
| Example 2 | 0.0098 | 1407 | 89.1 | 93.3 |
| Example 3 | 0.0028 | 1380 | 89.0 | 93.0 |
| Example 4 | 0.0218 | 1301 | 88.7 | 94.9 |
| Example 5 | 0.0108 | 1383 | 89.6 | 94.0 |
| Example 6 | 0.0055 | 1320 | 88.9 | 93.5 |
| Example 7 | 0.025 | 1655 | 86.9 | 90.9 |
| Example 8 | 0.0062 | 1457 | 88.0 | 92.4 |
| Example 9 | 0.0029 | 580 | 86.4 | 95.0 |
| Comparative Example 1: | 0.05970 | 1233 | 84.9 | 90.1 |
| Comparative Example 2 | 0.00085 | 1433 | 84.9 | 85.3 |
| Comparative example 3 | 0.000021 | 1419 | 85.8 | 86.1 |

FIG. 4 is a graph of initial charging and discharging curve of the anode material prepared by Example 1 of the present disclosure. As shown in FIG. 4, the anode material prepared by Example 1 has a higher initial charging and discharging capacity and a higher initial Coulombic efficiency.

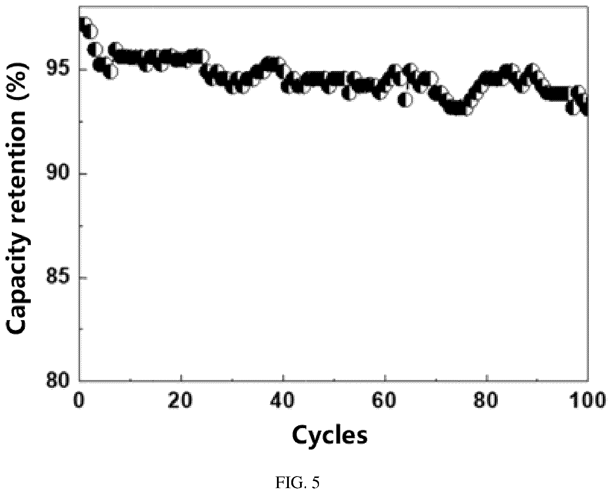

FIG. 5 is a graph of cycle performance curve of the anode material prepared by Example 1 of the present disclosure. As shown in FIG. 5, the anode material has excellent cycle performance, with a capacity retention after 100 cycles of93.7 %.

As shown in Table 1, the anode materials prepared by Examples 1 to 7 include the aggregate, and the aggregate includes an active material and a carbon material. The anion in the aggregate facilitates further transmission of a carrier, promotes diffusion of lithium ions and electrons in the material, and improves transmission efficiency of the carrier in the material, thereby improving cycle performance and initial Coulombic efficiency of the anode material.

Among them, in the preparation process of the anode material of Example 7, no carbon-coating process was performed. Thus, the active material directly contacts with electrolyte, the formed SEI film is unstable, and the cycle performance is degraded.

In the preparation process of the anode material of Example 8, the sintering temperature was 500°C. The temperature is too low, resulting in incomplete carbonization, poor coating effect, and reduced first efficiency.

In the preparation process of the anode material of Example 9, in the step (2), no acid-washing was performed. Thus, a metal oxide impurity is present, the capacity of the material is reduced, and the initial efficiency is reduced, either.

In the preparation process of the anode material of Comparative Example 1, in step (1), there was a too high content of inorganic salt in the raw material. The anion in the aggregate has a too high content, thus a part of ion reacts with a lithium ion, binding a part of Li⁺, thereby degrading initial Coulombic efficiency and cycle life performance of the material.

In the preparation process of the anode material of Comparative Example 2, in step (1), there was a too low inorganic salt content in the raw material. The anion has a too low content, thus electrochemical performance of the material is difficult to be improved, degrading initial Coulombic efficiency and cycle life performance of the material.

In the preparation process of the anode material of Comparative Example 3, in step (1), no inorganic salt was added into the raw material. Thus, electrochemical performance of the material is difficult to be improved.

Although the present disclosure is disclosed above in terms of preferred embodiments, but not intended to limit the claims. Any of those skilled in the art may make several possible changes and modifications without departing from the concept of the present disclosure, so the protection scope of the present disclosure should be defined by the claims of the present disclosure.

## Claims

1. An anode material, **characterized in that** the anode material comprises an aggregate, the aggregate comprises a carbon material and a silicon material, there is an anion present in the aggregate, and the anion accounts a mass content of 0.001 wt% to 0.5 wt% in the anode material.

2. The anode material according to claim 1, **characterized in that** the anode material comprises at least one of the following features (1) to (9):
(1) the anion comprises at least one of F⁻, Cl⁻, Br⁻, NO₃⁻, SO₄²⁻, NO²⁻, and PO₄³⁻;
(2) the silicon material comprises at least one of an elemental silicon, a silicon alloy, and a silicon oxide;
(3) the silicon material comprises an elemental silicon and a silicon oxide layer present on surface of the elemental silicon;
(4) the silicon material comprises an elemental silicon and a silicon oxide layer present on surface of the elemental silicon, wherein the silicon oxide layer has a thickness of 1 nm to 50 nm;
(5) the silicon material has a median particle size of 1 nm to 500 nm;
(6) the silicon material accounts a mass ratio of 10% to 80% in the anode material;
(7) the carbon material comprises at least one of artificial graphite, natural graphite, soft carbon, hard carbon, amorphous carbon, activated carbon, mesocarbon microbead, carbon nanotube, carbon nanofiber, graphene, and porous carbon;
(8) the anion is present in interstitial void of the silicon material, wherein the anion has an ion radius of 118 pm to 940 pm; and
(9) the anion is present in interstitial void of the silicon material, wherein the anion comprises at least one of F⁻, Cl⁻, and Br⁻.

3. The anode material according to any one of claims 1 and 2, **characterized in that** the anode material comprises at least one of the following features (1) to (6):
(1) the anode material further comprises a carbon layer present on at least a part of surface of the aggregate;
(2) the anode material further comprises a carbon layer present on at least a part of surface of the aggregate, wherein the carbon layer comprises amorphous carbon;
(3) the anode material further comprises a carbon layer coated on at least a portion of surface of the aggregate, wherein the carbon layer has a thickness of 1 nm to 3000 nm;
(4) the carbon material accounts a mass ratio of 10% to 80% in the anode material;
(5) the anode material has a median particle size of 0.5 µm to 30 µm; and
(6) the anode material has a specific surface area of ≤10 m²/g.

4. A preparation method of an anode material, **characterized in that** the preparation method comprises the following steps:
hydrolyzing a mixed solution comprising a silicon source precursor and an anion-containing inorganic salt to obtain a hydrolysate;
reducing the hydrolysate to obtain a silicon material; and
preparing an aggregate comprising a carbon material and the silicon material.

5. The preparation method according to claim 4, **characterized in that** the preparation method comprises at least one of the following features (1) to (10):
(1) the silicon source precursor comprises at least one of ethyl orthosilicate, methyl orthosilicate, sodium silicate, polysiloxane, trimethylethoxysilane, methyltrimethoxysilane, methyltriethoxysilane, and silsesquioxane;
(2) the anion comprises at least one of F⁻, Cl⁻, Br⁻, NO₃⁻, SO₄²⁻, NO²⁻, and PO₄³⁻;
(3) the mixed solution further comprises a first solvent, wherein the first solvent comprises at least one of methanol, ethanol, ethylene glycol, propanol, isopropanol, glycerol, n-butanol, isobutanol, and pentanol;
(4) the mixed solution further comprises a hydrolysis promoter;
(5) the mixed solution further comprises a hydrolysis promoter, wherein the hydrolysis promoter comprises at least one of ammonia water, urea, hydrochloric acid, sulfuric acid, sodium bicarbonate, sodium hydroxide, ammonium acetate, and ammonium chloride;
(6) the hydrolysis is performed under stirring, and has a duration of 3 h to 10 h;
(7) before hydrolyzing a mixed solution comprising a silicon source precursor and an anion-containing inorganic salt, the method further comprises: mixing the anion-containing inorganic salt, a first solvent, and a hydrolysis promoter to form a first pre-mixture, mixing the silicon source precursor and the first solvent to form a second pre-mixture, and mixing the first pre-mixture and the second pre-mixture to obtain the mixed solution;
(8) the anion accounts a mass content of 5 wt% to 55 wt% in the first pre-mixture;
(9) the silicon source precursor accounts a mass content of 10 wt% to 70 wt% in the second pre-mixture; and
(10) after hydrolyzing a mixed solution comprising a silicon source precursor and an anion-containing inorganic salt, the method further comprises: removing the first solvent from the hydrolysate.

6. The preparation method according to claim 4 or 5, **characterized in that** the preparation method comprises at least one of the following features (1) to (9):
(1) a process of reducing the hydrolysate comprises: fully mixing the hydrolysate with a reductive metal and sintering;
(2) a mass ratio of the hydrolysate and the reductive metal is 100: (13 to 130);
(3) the reductive metal comprises at least one of aluminum, zinc, magnesium, sodium, lithium, calcium, and potassium;
(4) the sintering has a temperature of 600°C to 1200°C, and a duration of 1 h to 10 h;
(5) a protective gas is introduced during the sintering;
(6) the protective gas comprises at least one of nitrogen, helium, neon, argon, and krypton;
(7) after mixing the hydrolysate with a reductive metal and sintering, the method further comprises: acid-washing and drying a sintered product, wherein an acid solution used for the acid-washing comprises at least one of hydrochloric acid, sulfuric acid, and nitric acid;
(8) a way for the fully mixing comprises at least one of mechanical stirring, ultrasonic dispersion, and milling dispersion; and
(9) the silicon material has a median particle size of 1 nm to 500 nm.

7. The preparation method according to any one of claims 4 to 6, **characterized in that** a process of preparing an aggregate comprising a carbon material and the silicon material comprises: subjecting a first precursor comprising a first carbon source and the silicon material to a primary heat treatment, to carbonize the first carbon source or to aggregate the first carbon source with the silicon material.

8. The preparation method according to claim 7, **characterized in that** the preparation method comprises at least one of the following features (1) to (13):
(1) a mass ratio of the silicon material and the first carbon source is (5 to 50): (15 to 80);
(2) the silicon material comprises at least one of an elemental silicon, a silicon alloy, and a silicon oxide;
(3) the silicon material comprises an elemental silicon and a silicon oxide layer present on surface of the elemental silicon, wherein the silicon oxide layer has a thickness of 1 nm to 50 nm;
(4) the first carbon source comprises at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt;
(5) the first carbon source comprises at least one of artificial graphite, natural graphite, soft carbon, hard carbon, amorphous carbon, activated carbon, mesocarbon microbead, carbon nanotube, carbon nanofiber, graphene, and porous carbon;
(6) before subjecting a first precursor comprising a first carbon source and the silicon material to a primary heat treatment, the method further comprises: fully dispersing the first carbon source, the first solvent, and the silicon material to form a second solution;
(7) the first solvent comprises at least one of methanol, ethanol, ethylene glycol, propanol, isopropanol, glycerol, n-butanol, isobutanol, and pentanol;
(8) a way for the fully dispersing comprises at least one of mechanical stirring, ultrasonic dispersion, and milling dispersion;
(9) a specific process of removing the first solvent comprises: drying the second solution;
(10) the drying has a temperature of 40°C to 400°C, and a duration of 1 h to 15 h;
(11) the first carbon source comprises at least one of artificial graphite, natural graphite, soft carbon, hard carbon, amorphous carbon, activated carbon, mesocarbon microbead, carbon nanotube, carbon nanofiber, graphene, and porous carbon, and the primary heat treatment has a temperature of 400°C to 1000°C, and a duration of 1 h to 5 h;
(12) the first carbon source comprises at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt, and the primary heat treatment has a temperature of 500°C to 1000°C, and a duration of 1 h to 5 h; and
(13) the primary heat treatment is performed in a protective atmosphere, wherein gas of the protective atmosphere comprises at least one of nitrogen, helium, neon, argon, and krypton.

9. The preparation method according to any one of claims 4 to 8, **characterized in that** the preparation method comprises at least one of the following features (1) to (8):
(1) the method further comprises carbon-coating the aggregate;
(2) the method further comprises carbon-coating the aggregate, wherein a process of the carbon-coating comprises: mixing the aggregate with a second carbon source, and performing a second heat treatment;
(3) The method further comprises carbon-coating the aggregate, wherein a process of the carbon-coating comprises: mixing the aggregate with a second carbon source, and performing a second heat treatment, and the second carbon source comprises at least one of sucrose, glucose, polyethylene, polyvinyl alcohol, polyethylene glycol, polyaniline, epoxy resin, phenolic resin, furfural resin, acrylic resin, polyethylene oxide, polyvinylidene fluoride, polyacrylonitrile, polyvinyl chloride, and asphalt;
(4) The method further comprises carbon-coating the aggregate, wherein a process of the carbon-coating comprises: mixing the aggregate with a second carbon source, and performing a second heat treatment, and a mass ratio of the aggregate and the second carbon source is (20 to 100): (10 to 80); and
(5) The method further comprises carbon-coating the aggregate, wherein a process of the carbon-coating comprises: mixing the aggregate with a second carbon source, and performing a second heat treatment, and the secondary heat treatment has a temperature of 800°C to 900°C, and a duration of 1 h to 5 h.

10. A lithium ion battery, **characterized in that** the lithium ion battery comprises the anode material according to any one of claims 1 to 3, or an anode material prepared by the preparation method according to any one of claims 4 to 9.
